Europäisches Patentamt

European Patent Office

Office européen des brevets

(11) Veröffentlichungsnummer: **0 264 583 B1**

(19)

# EUROPÄISCHE PATENTSCHRIFT

(12)

(45) Veröffentlichungstag der Patentschrift: **29.05.91**

(51) Int. Cl.5: **B41K 1/10**

(21) Anmeldenummer: **87112466.5**

(22) Anmeldetag: **27.08.87**

(54) **Druckwerk.**

(30) Priorität: **21.10.86 DE 3635734**

(43) Veröffentlichungstag der Anmeldung:
**27.04.88 Patentblatt 88/17**

(45) Bekanntmachung des Hinweises auf die
Patenterteilung:
**29.05.91 Patentblatt 91/22**

(84) Benannte Vertragsstaaten:
**AT BE CH DE ES FR GB GR IT LI NL SE**

(56) Entgegenhaltungen:
**EP-A- 0 047 874**
**EP-A- 0 154 212**
**GB-A- 2 057 361**

(73) Patentinhaber: **ESSELTE METO INTERNATIO-
NAL PRODUKTIONS GMBH
Brentanostrasse
W-6932 Hirschhorn/Neckar(DE)**

(72) Erfinder: **Volk, Heinrich
Neckartalstrasse 29
W-6124 Beerfelden-Gammelsbach(DE)**

(74) Vertreter: **Schwepfinger, Karl-Heinz, Dipl.-Ing.
et al
Prinz, Leiser, Bunke & Partner Manzingerweg
7
W-8000 München 60(DE)**

## Beschreibung

Die Erfindung bezieht sich auf ein Druckwerk mit mehreren Typenträgern, die an ihrer Außenumfangsfläche in einem Bereich Drucktypen und in einem anderen Bereich Ablesetypen tragen, wobei die Drucktypen durch Verdrehen der Typenträger in eine gewünschte Druckposition gebracht werden können, mit Anschlagmitteln zur Begrenzung des Verdrehwegs der Typenträger und mit einer Einstellanordnung die durch axiales Verschieben mit jedem einzelnen der Typenträger zu dessen Verdrehen in eine Antriebsverbindung bringbar ist, und einer Drehmomentbegrenzungsvorrichtung (96) zur Übertragung eines begrenzten Drehmoments zwischen einem ersten und einem zweiten Bauteil der Einstellanordnung und einer am zweiten Bauteil angebrachten Befestigungsvorrichtung zum axial festen Verbinden des ersten und des zweiten Bauteils miteinander.

Ein solches Druckwerk ist aus der DE-PS 34 06 762 bekannt. Bei diesem bekannten Druckwerk verhindern die Anschlagmittel, daß die Typenträger durch Drehen des Einstellknopfs und der mit ihm verbundenen Einstellwelle so weit verdreht werden, daß die Ablesetypen in die Druckposition gelangen und in dieser Position mit der Druckfarbe in Kontakt kommen. Die gute Erkennbarkeit der Ablesetypen würde dadurch stark beeinträchtigt. In der Praxis hat sich gezeigt, daß solche Anschlagmittel die Bedienungsperson häufig nicht davon abhalten, den Versuch zu unternehmen, die Typenträger durch Anwendung einer großen Kraft über die durch die Anschlagmittel vorgegebenen Endpositionen hinwegzubewegen. Dabei kann es dann unter Umständen zu einer Beschädigung des Druckwerks kommen. Um dies zu verhindern, ist bei dem bekannten Druckwerk zwischen einer Einstellwelle und einem auf dieser sitzenden Betätigungsknopf eine Rutschkupplung vorgesehen, die durchrutscht und ein weiteres Verdrehen der Einstellwelle und des damit jeweils gekoppelten Typenträgers verhindert, sobald das vom Betätigungsknopf auf die Einstellwelle übertragene Drehmoment größer als das zum Verdrehen der Typenträger notwendige Drehmoment wird. Dies bedeutet, daß dann, wenn die Anschlagmittel wirksam werden, der Betätigungsknopf auf der Einstellwelle durchrutscht, so daß die Aufwendung einer größeren Kraft durch die Bedienungsperson keine schädlichen Auswirkungen auf das Druckwerk haben kann.

Bei dem bekannten Druckwerk ist das Grenzdrehmoment, bei dem das Durchrutschen der Rutschkupplung beginnt, durch die Zusammenwirkung des Materials des Betätigungsknopfs und der Passung, mit der der Betätigungsknopf auf der Einstellwelle sitzt, vorgegeben. Es hat sich gezeigt, daß die genaue Einhaltung des Grenzdrehmoments zu Schwierigkeiten führt, da es eine große Konstanz der Materialeigenschaften des Betätigungsknopfs voraussetzt. Auch Faktoren, auf die der Druckwerkhersteller keinen Einfluß hat, können das Grenzdrehmoment beeinflussen; beispielsweise wird das Grenzdrehmoment drastisch herabgesetzt, wenn Öl auf die Einstellwelle gelangt. In diesem Fall kann es beispielsweise so weit herabgesetzt werden, daß ein normales Verstellen der Typenträger nicht mehr möglich ist, da der Betätigungsknopf bereits bei Aufwendung dieses Verstelldrehmoments auf der Einstellwelle durchrutscht.

Die Anwendung von Drehmomentübertragungsvorrichtungen, bei denen die geschilderten Probleme nicht auftreten, kann in einem Druckwerk der geschilderten Art nicht ohne weiteres verwirklicht werden, da nur sehr wenig Platz zur Verfügung steht und die Funktionssicherheit nicht beeinträchtigt werden darf. Es kommt außerdem das Problem hinzu, daß die beiden Bauteile, zwischen denen das Drehmoment übertragen werden soll, axial fest miteinander verbunden werden müssen, was die Platzprobleme noch erschwert.

Der Erfindung liegt demgemäß die Aufgabe zugrunde, ein Druckwerk zu schaffen, bei dem die im Zusammenhang mit der Verwendung einer Rutschkupplung zwischen dem ersten und dem zweiten Bauteil der Einstellanordnung geschilderten Probleme nicht mehr auftreten und gleichzeitig eine sichere Verbindung der beiden Bauteile gegen eine relative Bewegung in axialer Richtung erhalten wird.

Diese Aufgabe wird gemäß der Erfindung dadurch gelöst, daß die Drehmomentbegrenzungsvorrichtung an dem ersten Bauteil angebrachte federnde Rastelemente sind, die mit komplementären Rastelementen am zweiten Bauteil in Eingriff stehen.

Die beim erfindungsgemäßen Druckwerk zur Verwirklichung der Drehmomentbegrenzungsvorrichtung angewendeten Rastelemente ergeben aufgrund ihrer Federhärte ein bei der Herstellung gut reproduzierbares Rastmoment, das auch über lange Zeiträume von Umwelteinflüssen nicht verändert wird. Trotz der Verwendung dieser Rastelemente, die zur Entfaltung ihrer Wirkung einen gewissen Federweg voraussetzen, kann die Befestigungsvorrichtung zum axial festen Verbinden des ersten und des zweiten Bauteils miteinander verwirklicht werden, da sie an dem zweiten Bauteil angebracht ist. Durch das Anbringen der Drehmomentbegrenzungsvorrichtung und der Befestigungsvorrichtung am jeweils anderen Bauteil können die beiden Vorrichtungen in einer für den beabsichtigten Zweck wirksamen Ausführung ausgebildet werden, ohne daß sie sich gegenseitig beeinträchtigen.

Vorteilhafte Weiterbildungen der Erfindung sind in den Unteransprüchen gekennzeichnet.

Die Erfindung wird nun anhand der Zeichnung beispielshalber erläutert. Es zeigen:

Fig. 1     eine Explosionsdarstellung eines Druckwerks nach der Erfindung,

Fig. 2     eine Innenansicht der rechten Gehäusehälfte des Druckwerks von Fig. 1,

Fig. 3     eine Ansicht der Einstellwelle zur Verstellung der Typenträger,

Fig. 4     einen Schnitt längs der Linie A-A von Fig. 3,

Fig. 5     eine Ansicht des Betätigungsknopfs in der Darstellung von Fig. 1 von der rechten Seite her,

Fig. 6     einen Schnitt längs der Linie B-B von Fig. 5 und

Fig. 7     einen Schnitt längs der Linie C-C von Fig. 5.

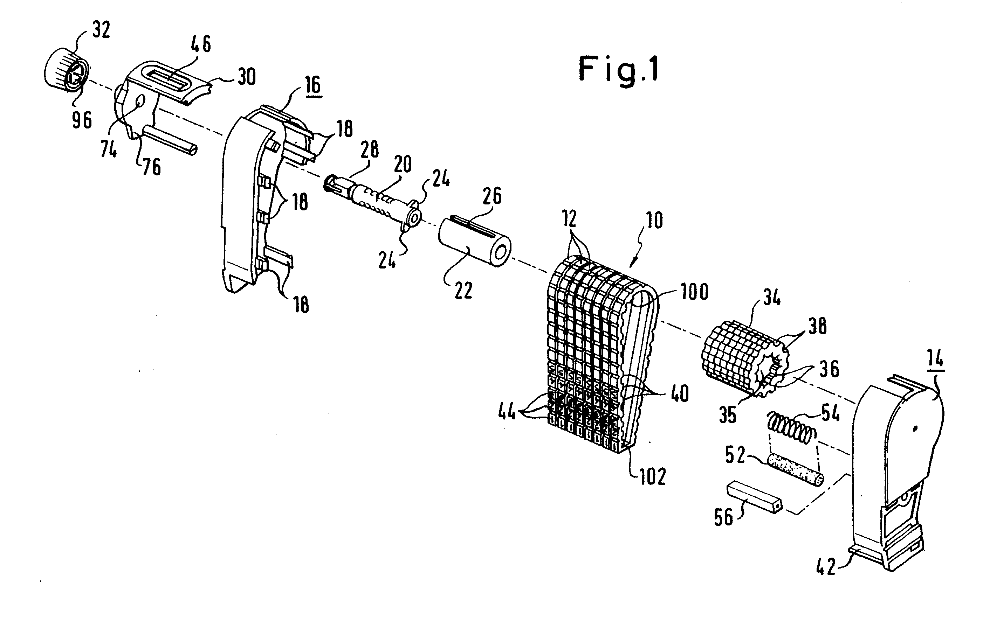

Das in Fig. 1 dargestellte Druckwerk 10 ist ein Stempeldruckwerk, bei dem als Typenträger Typenbänder 12 verwendet werden. Das Druckwerk enthält zwei Gehäusehälften 14 und 16, die über Schnapphaken 18 miteinander verbunden werden können. In der Gehäusehälfte 16 ist als ein Bauteil einer Einstellanordnung eine Einstellwelle 20 drehbar gelagert, über die eine geschlitzte Hülse 22 geschoben ist. Am Ende der Einstellwelle 20 angebrachte Mitnehmer 24 greifen durch Schlitze 26 in der Hülse 22 über deren Außenumfang hinaus. Auf dem Endbereich 28 der Einstellwelle 20 sitzen ein Fensterträger 30 und als weiteres Bauteil der Einstellanordnung ein Betätigungsknopf 32, mit dessen Hilfe die Einstellwelle 20 gedreht und axial verschoben werden kann. Bei der Verschiebung der Einstellwelle 20 wird auch der Fensterträger 30 axial verschoben, und die Mitnehmer 24 gleiten axial längs der Schlitze 26 in der Hülse 22. Auf der Hülse 22 sitzen Einstellräder 34, die an ihrer eine zentrale Öffnung 35 umgebenden Innenumfangsfläche Nuten 36 aufweisen, in die die Mitnehmer 24 der Einstellwelle 20 eingreifen. Durch axiales Verschieben der Einstellwelle 20 können die Mitnehmer 24 jeweils mit Nuten 36 eines Einstellrads 34 in Eingriff gebracht werden. Auf diese Weise kann durch Drehen des Betätigungsknopfs 32 nacheinander jedes der Einstellräder 34 gedreht werden. Die Einstellräder 34 sind an ihrer Außenumfangsfläche ebenfalls mit Nuten 38 versehen, in die an der Innenumfangsfläche der Typenbänder 12 angebrachte Vorsprünge 40 eingreifen. Auf diese Weise können die Typenbänder 12 über den Eingriff zwischen den Mitnehmern 24 und den Nuten 36 sowie den Eingriff zwischen den Nuten 38 und den Vorsprüngen 40 bewegt werden.

Die Typenbänder 12 sind im Druckwerk um die Einstellräder 34 herumgelegt, und sie umgreifen außerdem einen an der unteren Stirnfläche der Gehäusehälfte 14 befindlichen, als Umlenkkante für die Typenbänder 12 dienenden Drucksteg 42. Die Drucktype, die sich bei der jeweiligen Einstellung der Typenbänder 12 gerade unter dem Drucksteg 42 befindet, erzeugt jeweils den gewünschten Abdruck. In diesem Zusammenhang sei bemerkt, daß in Fig. 1 an den Typenbändern 12 nur einige der Ablesetypen dargestellt sind; die Drucktypen befinden sich auf der in Fig. 1 nicht erkennbaren Rückseite des von den Typenträgern 12 gebildeten Typenträgersatzes. Die erkennbaren Ablesetypen 44 und die jeweils zugeordneten Drucktypen sind auf den Typenbändern 12 so angebracht, daß immer dann, wenn sich eine Drucktype unterhalb des Druckstegs 42 in der Druckposition befindet, die entsprechende Ablesetype durch ein Fenster 46 im Fensterträger 30 sichtbar ist. Auf diese Weise ist durch das Fenster 46 hindurch stets erkennbar, welche Drucktypen sich gerade in der Druckposition unter dem Drucksteg 42 befinden.

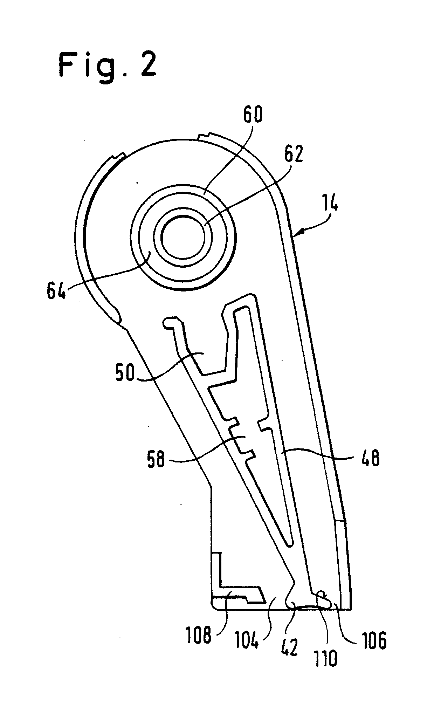

Nach Fig. 2 ist der Drucksteg 42 einstückig am unteren Ende eines mit der Gehäusehälfte 14 verbundenen Trägerelements 48 angebracht. An seinem oberen Ende weist das Trägerelement 48 eine Ausnehmung 50 auf, in der sich im zusammengebauten Zustand des Druckwerks ein Gummistreifen 52 und darüber eine Schraubenfeder 54 befinden. Der Gummistreifen 52 und die Schraubenfeder 54 haben zusammen eine solche Höhe, daß die Schraubenfeder 54 aus der Ausnehmung 50 nach oben herausragt und mit den darüber angeordneten Einstellrädern 34 in Kontakt kommt. Die Schraubenfeder 54 übt dabei eine begrenzte Haltekraft auf die Einstellräder aus, die deren Verdrehung entgegenwirkt. Wenn ein Einstellrad 34 durch Drehen der Einstellwelle 20 mittels des Betätigungsknopfs 32 gedreht wird, spürt die Bedienungsperson eine Rastkraft, die jeweils überwunden werden muß, um ein Typenband 12 schrittweise so zu verstellen, daß eine Drucktype nach der anderen unter dem Drucksteg 42 zu liegen kommt.

Mittels eines Vierkantstücks 56, das in eine Ausnehmung 58 im Trägerelement 48 eingesetzt ist und dessen Breite der lichten Innenbreite der beiden Gehäusehälften 14, 16 entspricht, kann das Stempeldruckwerk beispielsweise mit einem Druckwerkträger eines Handetikettiergeräts verschraubt werden. Die entsprechenden, in Fig. 2 nicht dargestellten Schrauben können dabei durch Löcher in den Gehäusehälften 14, 16 gesteckt und in Gewindebohrungen in den Enden des Vierkantstücks 56 geschraubt werden.

Zur Lagerung der Hülse 22 in der Gehäusehälfte 14 sind zwei Ringbünde 60, 62 vorgesehen, deren radialer Abstand eine Ausnehmung 64 bildet, deren radiale Abmessung gleich der Wandstärke der Hülse 22 ist, so daß diese Hülse in die Ausnehmung geschoben und von den Ringbünden 60 und 62 gehalten werden kann. Der innere Ringbund 62 greift dabei innen in die Hülse 22 ein, während der äußere Ringbund 60 die Hülse 22 außen umfaßt. Die beiden Ringbünde haben nur eine geringe axiale Erstreckung, so daß sie jeweils nur das in Fig. 1 am weitesten rechts liegende Ende der Hülse 22 festhalten.

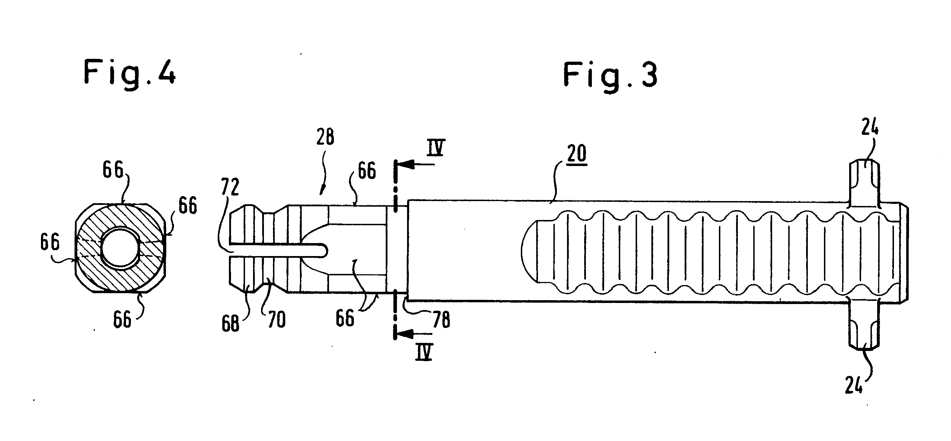

In Fig. 3 ist die Einstellwelle des Druckwerks von Fig. 1 in einer vergrößerten Ansicht dargestellt. Der für die Aufnahme des Betätigungsknopfs 32 bestimmte Endbereich 28 der Einstellwelle 20 hat einen teilweise quadratischen Querschnitt mit abgerundeten Ecken, so daß vier Rastflächen 66 entstehen. Unmittelbar am Ende weist die Einstellwelle 20 einen Wulst 68 und eine sich daran anschließende Umfangsnut 70 auf. Ein im Endbereich 28 der Einstellwelle 20 angebrachter diametraler Schlitz 72 erzeugt eine gewisse Elastizität dieses Endbereichs und eine Nachgiebigkeit des Wulsts 68. Der Wulst 68 und die Umfangsnut 70 haben den Zweck, den auf den Endbereich 28 geschobenen Betätigungsknopf 32 sicher festzuhalten, ohne daß dieser mit Hilfe zusätzlicher Mittel befestigt werden muß. Wie das Festhalten erfolgt, wird anschließend bei der Schilderung der Ausgestaltung des Betätigungsknopfs noch erkennbar werden.

Im zusammengebauten Zustand ragt der Endbereich 28 der Einstellwelle 20 durch eine Öffnung 74 in einer Seitenplatte 76 des Fensterträgers 30, wobei die Stufe 78 an der Einstellwelle 20 als Anschlag wirkt, die ein weiteres Hineinschieben der Einstellwelle 20 in die Öffnung 74 verhindert. Der Abschnitt des Endbereichs 28, der den quadratischen Querschnitt hat, ragt aus der Öffnung 74 in der Seitenplatte 76 in der Ansicht von Fig. 1 nach links heraus, so daß der Betätigungsknopf 32 auf den Endbereich aufgeschoben werden kann.

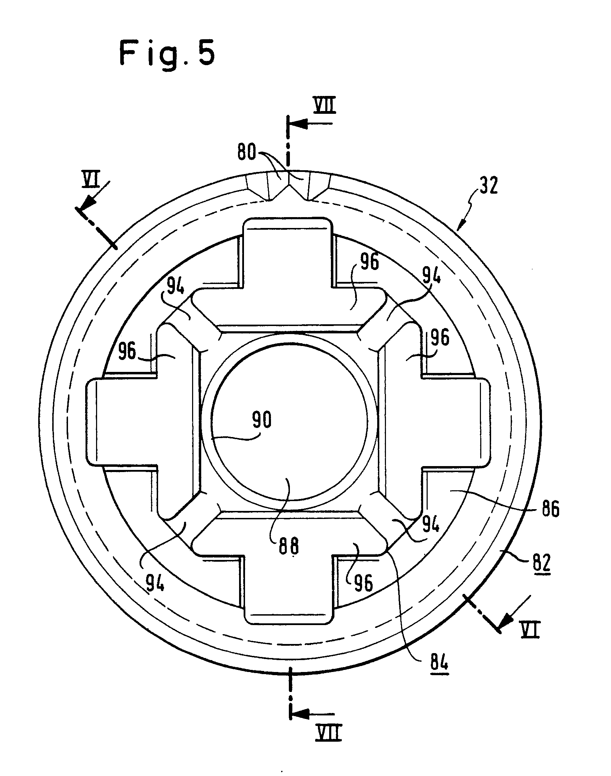

Nach den Fig. 5, 6 und 7 ist der Betätigungsknopf 32 an seiner Außenumfangsfläche leicht konisch ausgebildet, damit sein Anfassen und Betätigen erleichtert werden. Zur Erhöhung der Griffigkeit ist die Außenumfangsfläche geriffelt, was in Fig. 5 zur Vereinfachung der Darstellung nur mit Hilfe von zwei Riffelnuten 80 angedeutet ist. Der Betätigungsknopf 32 weist eine Außenhülse 82 und eine Innenhülse 84 auf, die mit der Außenhülse 82 an der Stirnfläche des Betätigungsknopfs 32 verbunden ist. Die Innenhülse 84 umgibt einen Innenhohlraum 88, der im Bereich der Stirnfläche 84 eine Verengung in Form eines Ringwulsts 90 hat. Wenn der Betätigungsknopf 32 auf die Einstellwelle aufgeschoben wird, drückt der Ringwulst 90 unter Ausnutzung der wegen des Schlitzes 72 gegebenen Nachgiebigkeit den Wulst 68 zusammen, bis der Ringwulst 90 in die Umfangsnut 70 gleitet. Der Wulst 68 kommt dann in der Erweiterung 92 im Betätigungsknopf 32 zu liegen, so daß der Betätigungsknopf 32 sicher auf der Einstellwelle 20 festgehalten wird. Das geschlitzte Ende der Einstellwelle mit dem Wulst 68 bildet eine Befestigungsvorrichtung, die den Betätigungsknopf 32 axial fest mit der Einstellwelle 20 verbindet.

Die Innenhülse 84 des Betätigungsknopfs 32 hat einen im wesentlichen quadratischen Querschnitt, wie in Fig. 5 zu erkennen ist. An den Ecken der quadratischen Form sind in Axialrichtung Schlitze 94 angebracht, so daß vier axial verlaufende Rastfinger 96 entstehen, die sich beim Aufschieben des Betätigungsknopfs 32 auf den Endbereich 28 der Einstellwelle 20 an die Rastflächen 66 anlegen. Wenn der Verdrehung der Einstellwelle 20 kein Widerstandsmoment entgegenwirkt, kann die Einstellwelle 20 mittels des aufgeschobenen Betätigungsknopfs 32 aufgrund der Zusammenwirkung der Rastfinger 96 mit den Rastflächen 66 gedreht werden. Die Rastfinger 96 sind aufgrund des Vorhandenseins der Schlitze 94 in radialer Richtung auslenkbar und wirken wie Federn, die eine bestimmte Federhärte haben. Diese Federhärte ist durch das Material und durch die konstruktive Ausgestaltung der Rastfinger festgelegt.

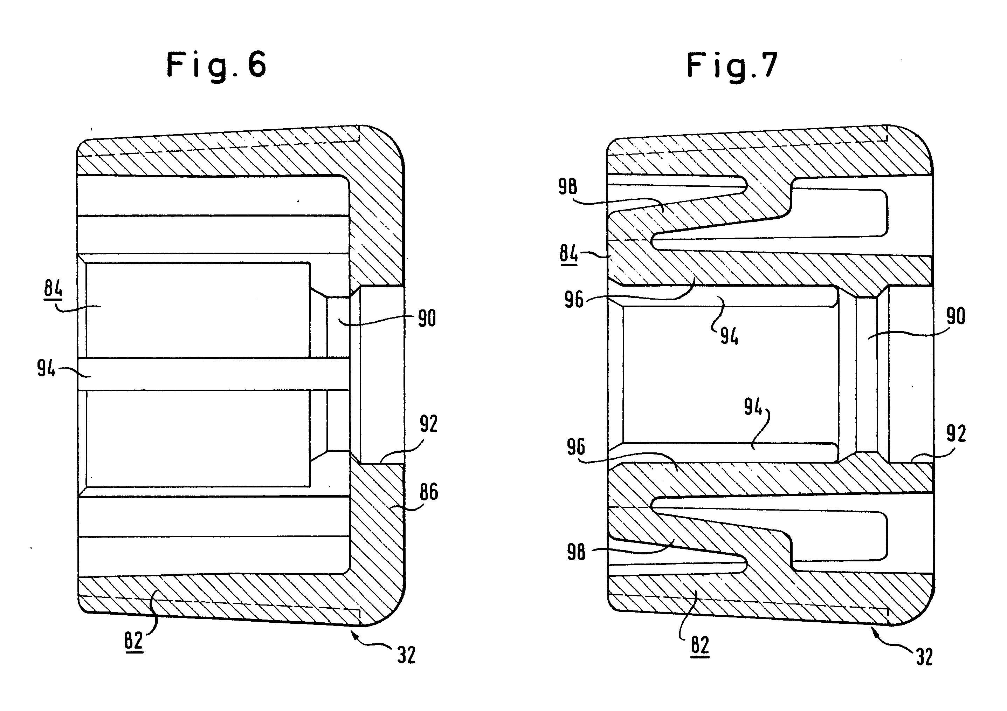

Fig. 7 zeigt, daß die freien Enden der Rastfinger 96 über Verbindungsstege 98 mit der Außenhülse verbunden sind, wobei die Stelle, an der die Verbindungsstege mit der Außenhülse 82 verbunden sind, etwa in der Mitte der Längserstreckung der Außenhülse 82 liegt. Diese Verbindungsstege erhöhen die Federhärte der Rastfinger, üben sonst aber keinen Einfluß auf die sich wie einseitig eingespannte Blattfedern verhaltenden Rastfinger 96 aus.

Wie erwähnt, nimmt der auf die Einstellwelle 20 aufgeschobene Betätigungsknopf 32 diese bei einem Verdrehen mit, solange der Verdrehung der Einstellwelle 20 kein Widerstandsmoment entgegenwirkt. Das Druckwerk von Fig. 1 ist jedoch so ausgestaltet, daß die Typenbänder 12 beim Drehen der Einstellwelle 20 nur einen vorgegebenen Verstellweg ausführen können, wobei jedem weiteren Verdrehen ein sehr großes Widerstandsmoment entgegengesetzt wird. Dieses große Widerstandsmoment wird dadurch erzeugt, daß an der Innenumfangsfläche der Typenbänder 12 Vorsprünge 100 und 102 angebracht sind, die so dimensioniert sind, daß sie nicht durch einen Spalt 106 zwischen dem Drucksteg 42 und der Wand des Gehäuses 14 oder einen Spalt zwischen dem Drucksteg 42 und einem mit dem Gehäuse 14 verbundenen Anschlagsteg 108 hindurchpassen. Die beiden Vorsprünge 100 und 102 begrenzen damit den Verstellweg der Typenbänder in beiden Verstellrichtungen in der Weise, daß zwar alle Drucktypen unter den Drucksteg 42 gelangen können, nicht aber die den Drucktypen zugeordneten Ablesetypen 44. Wenn also ein Typenband so weit verstellt worden ist, daß der Vorsprung 100 in Anlage an die Oberkante 110 des Druckstegs 142 gekommen ist, steigt das dem weiteren Verdrehen entgegenwirkende Widerstandsmoment sehr stark an. Die Federhärte der Rastfinger 96 ist so dimensioniert, daß in dieser Situation eine Auslenkung der Federfinger 96 radial nach außen stattfindet, so daß die von den Rastfingern 96 ausgeübte Rastkraft überwunden wird und der Betätigungsknopf 32 auf dem Endbereich 28 der Einstellwelle 20 durchrutscht. Auf diese Weise wird das übertragbare Drehmoment begrenzt, so daß durch ein gewaltsames Weiterdrehen des Betätigungsknopfs 32 Beschädigungen des Druckwerks verhindert werden.

In der anderen Drehrichtung führt der Vorsprung 102 zum starken Ansteigen des Widerstandsmoments.

## Ansprüche

1. Druckwerk mit mehreren Typenträgern (12, 34), die an ihrer Außenumfangsfläche in einem Bereich Drucktypen und in einem anderen Bereich AblesetyPen (44) tragen, wobei die Drucktypen durch Verdrehen der Typenträger (12, 34) in eine gewünschte Druckposition gebracht werden können, mit Anschlagmitteln (100, 102, 104, 106, 110) zur Begrenzung des Verdrehwegs der Typenträger (12, 34) und mit einer Einstellanordnung (32, 20, 24), die durch axiales Verschieben mit jedem einzelnen der Typenträger (12, 34) zu dessen Verdrehen in eine Antriebsverbindung bringbar ist, und einer Drehmomentbegrenzungsvorrichtung (96) zur Übertragung eines begrenzten Drehmoments zwischen einem ersten und einem zweiten Bauteil (32 bzw. 20) der Einstellanordnung (32, 20, 24) und einer am zweiten Bauteil (20) angebrachten Befestigungsvorrichtung (68, 72) zum axial festen Verbinden des ersten und des zweiten Bauteils (32 bzw. 20) miteinander, dadurch gekennzeichnet, daß die Drehmomentbegrenzungsvorrichtung (96) an dem ersten Bauteil (32) angebrachte federnde Rastelemente (96) sind, die mit komplementären Rastelementen (66) am zweiten Bauteil (20) in Eingriff stehen.

2. Druckwerk nach Anspruch 1, dadurch gekennzeichnet, daß das erste Bauteil ein Betätigungsknopf (32) ist, daß das zweite Bauteil eine diesen Betätigungsknopf (32) auf einem Endbereich (28) tragende Einstellwelle (20) ist, die sich durch zentrale Öffnungen der Typenträger (12) bzw. durch zentrale Öffnungen (35) von dem Verdrehen der Typenträger (12) dienenden Einstellrädern (34) erstreckt, und daß die federnden Rastelemente am Betätigungsknopf angebrachte, sich axial erstreckende Rastfinger (96) sind, die mit die komplementären Rastelemente bildenden Rastflächen (66) an der Einstellwelle (20) in Eingriff stehen.

3. Druckwerk nach Anspruch 2, dadurch gekennzeichnet, daß der Betätigungsknopf (32) aus einer Außenhülse (82) und einer damit an der Stirnwand (86) des Betätigungsknopfs (32) verbundenen Innenhülse (84) besteht, daß die Innenhülse (84) zur Bildung der Rastfinger (96) mit axialen Schlitzen (94) versehen ist, daß ein Abschnitt des den Betätigungsknopf (32) aufnehmenden Endbereichs (28) der Einstellwelle (20) im Querschnitt ein Polygon ist, dessen Seitenflächen Rastflächen (66) bilden, wobei die Anzahl der Rastflächen (66) gleich der Anzahl der Rastfinger (96) ist.

4. Druckwerk nach Anspruch 3, dadurch gekennzeichnet, daß der polygonale Abschnitt des den Betätigungsknopf (32) aufnehmenden Endbereichs (28) der Einstellwelle (20) im Querschnitt quadratisch ist.

5. Druckwerk nach einem der Ansprüche 2 bis 4, gekennzeichnet durch einen Verbindungssteg (98) zwischen dem freien Ende jedes Rastfingers (96) und einer etwa in der Mitte der Längserstreckung der Außenhülse (82) liegenden Stelle.

6. Druckwerk nach einem der Ansprüche 3 bis 5, dadurch gekennzeichnet, daß der Innenhohlraum (88) der Innenhülse (84) im Bereich der Stirnwand (86) des Betätigungsknopfs (32) eine Verengung (90) mit kreisförmigem Querschnitt aufweist, daß die Einstellwelle (20) zur Bildung der Befestigungsvorrichtung unmittelbar am Ende einen Wulst (68) und dahinter eine Umfangsnut (70) aufweist, wobei der Durchmesser des Wulsts (68) größer als der Innendurchmesser des Innenhohlraums (88) im Bereich der Verengung (90) und der Durchmesser der Nut (70) gleich diesem Innendurchmesser ist, und daß die Einstellwelle (20) in dem den Betätigungsknopf (32) tragenden Endbereich (28) einen diametral verlaufenden Schlitz (72) aufweist.

## Claims

1. Printing mechanism comprising a plurality of type carriers (12, 34) which at their outer peripheral face carry in one region printing types and in another region indicator types (44), the printing types being adapted by turning the type carriers (12, 34) to be brought into a desired printing position, stop means (100, 102, 104, 106, 110) for limiting the turning travel of the type carriers (12, 34) and a setting means (32, 20, 24) which by axial displacement can be brought into a drive connection with each of the type carriers (12, 34) for rotation thereof, and a torque limiting means (96) for transmitting a limited torque between a first and second component (32 and 20, respectively) of the setting means (32, 20, 24) and a securing means (68, 72) for axially fixedly connecting together the first and the second component (32 and 20, respectively), characterized in that the torque limiting means (96) are resilient detent means (96) which are disposed on the first component (32) and which engage complementary detent elements (66) on the second component (20).

2. Printing mechanism according to claim 1, characterized in that the first component is an actuating knob (32), that the second component is a setting shaft (20) which carries said actuating knob (32) on an end region (28) and extends through central openings (35) in the type carrier (12) or through central openings (35) of the setting shafts (34) adapted for turning the type carrier (12) and that the resilient detent elements are axially extending detent fingers (96) which are disposed on the actuating knob and which are in engagement with detent faces (66) on the setting shaft (20) forming complementary detent elements.

3. Printing mechanism according to claim 2, characterized in that the actuating knob (32) consists of an outer sleeve (82) and an inner sleeve (84) connected thereto at the end wall (86) of the actuating knob (32), that the inner sleeve (84) is provided with axial slots (94) to form the detent fingers (96), that a portion of the end region (28) of the setting shaft (20) receiving the actuating knob (32) is in cross-section a polygon whose side faces form detent faces (66), the number of detent faces (66) being equal to the number of the detent fingers (96).

4. Printing mechanism according to claim 3, characterized in that the polygonal portion of the end region (28) of the setting shaft (20) receiving the actuating knob (32) is square in cross-section.

5. Printing mechanism according to any one of claims 2 to 4, characterized by a connecting web (98) between the free end of each detent finger (96) and a point lying substantially in the centre of the longitudinal extent of the outer sleeve (82).

6. Printing mechanism according to any one of claims 3 to 5, characterized in that the inner cavity (88) of the inner sleeve (84) comprises in the region of the end wall (86) of the actuating knob (32) a constriction (90) of circular cross-section, that the setting shaft (20) for forming the securing means comprises directly at the end a bead (68) and therebehind a peripheral groove (70), the diameter of the bead (68) being greater than the inner diameter of the inner cavity (88) in the region of the constriction (90) and the diameter of the groove (70) being equal to said inner diameter, and that the setting shaft (20) comprises in the end region (28) carrying the actuating knob (32) a diametrically extending slot (72).

## Revendications

1. Groupe d'impression comprenant plusieurs porte-caractères (12, 34) qui comportent sur une partie de leur surface circonférentielle extérieure des caractères d'impression et, sur une autre partie de cette surface, des caractères de lecture (44), les caractères d'impression pouvant être amenés à une position souhaitée d'impression par un mouvement de révolution des porte-caractères (12, 34), ledit groupe comprenant des organes de butée (100, 102, 104, 106, 110) destinés à limiter la course de révolution des porte-caractères (12, 34) ainsi qu'un mécanisme de positionnement (32, 20, 24) qui, par déplacement axial, peut être mis en liaison d'entraînement avec chaque porte-caractères individuel (12, 34) pour lui imprimer un mouvement de révolution, ledit groupe comprenant par ailleurs un dispositif de limitation du couple de rotation (96) destiné à transmettre un couple limité de rotation entre un premier et un second composant (32 et respectivement 20) du mécanisme de positionnement (32, 20, 24) ainsi qu'un dispositif de fixation (68, 72) placé sur le second composant (20) et destiné à solidariser axialement le premier et le second composant (32 et respectivement 20) l'un avec l'autre, caractérisé en ce que le dispositif de limitation du couple de rotation (96) consiste en des éléments élastiques d'arrêt (96) placés sur le premier composant (32) et mis en prise avec des éléments complémentaires d'arrêt (66) situés sur le second composant (20).

**2.** Groupe d'impression selon la revendication 1, caractérisé en ce que le premier composant est un bouton de manipulation (32), en ce que le deuxième composant est un arbre de positionnement (20) supportant à une extrémité (28) ce bouton de manipulation (32), ledit arbre passant par une ouverture centrale des porte-caractères (12) et respectivement par une ouverture centrale (35) de roues de positionnement (34) destinées à imprimer un mouvement de révolution aux porte-caractères (12), et en ce que les éléments élastiques d'arrêt consistent en des épaulements (96) placés sur le bouton de manipulation, orientés axialement et mis en prise avec des surfaces d'arrêt (66) que comporte l'arbre de positionnement (20) et qui forment les éléments d'arrêt complémentaires.

**3.** Groupe d'impression selon la revendication 2, caractérisé en ce que le bouton de manipulation (32) se compose d'une douille extérieure (82) et d'une douille intérieure (84) reliée à la précédente le long de la cloison frontale (86) du bouton de manipulation (32), en ce que la douille intérieure (84) comporte des fentes axiales (94) assurant la formation des épaulements d'arrêt (96), en ce qu'une partie de l'extrémité (28) de l'arbre de positionnement (20) qui supporte le bouton de manipulation (32) est en coupe transversale un polygone dont les surfaces latérales forment les surfaces d'arrêt (66), le nombre des surfaces d'arrêt (66) étant égal au nombre des épaulements d'arrêt (96).

**4.** Groupe d'impression selon la revendication 3, caractérisé en ce que le tronçon polygonal de l'extrémité (28) de l'arbre de positionnement (20) qui supporte le bouton de manipulation (32) est carré en coupe transversale.

**5.** Groupe d'impression selon l'une des revendications 2 à 4, caractérisé par un ligament de liaison (98) entre l'extrémité libre de chaque épaulement d'arrêt (96) et un emplacement situé approximativement à mi-longueur de la douille extérieure (82).

**6.** Groupe d'impression selon l'une des revendications 3 à 5, caractérisé en ce que la cavité intérieure (88) de la douille intérieure (84) comporte un rétrécissement (90) de section circulaire qui est situé au niveau de la cloison frontale (86) du bouton de manipulation (32), en ce que l'arbre de positionnement (20) comporte directement a l'extrémité un bourrelet (68) et, derrière ce dernier, une gorge circonférentielle (70) afin de former le dispositif de fixation, le diamètre du bourrelet (68) étant supérieur au diamètre intérieur de la cavité intérieure (88) au niveau du rétrécissement (90) et le diamètre de la gorge (70) étant égal à ce diamètre intérieur, et en ce que l'arbre de positionnement (20) comporte une fente diamétrale (72) à l'extrémité (28) supportant le bouton de manipulation (32).

Fig.1

# Fig. 2

Fig. 3

Fig. 4

# Fig. 5

# Fig. 6

# Fig.7

EP 0 264 583 B1